# EUROPÄISCHE PATENTSCHRIFT

(11) **EP 0 767 027 B1**
(45) Veröffentlichungstag und Bekanntmachung des Hinweises auf die Patenterteilung: **22.09.1999**
(21) Anmeldenummer: 96118248.2
(22) Anmeldetag: 15.07.1994
(51) Int. Cl.: B23K 9/127

(54) **Verfahren zum Schweissen**
Welding method
Procédé de soudage

(30) Priorität: 16.07.1993 DE 4323924
(43) Veröffentlichungstag der Anmeldung: 09.04.1997
(62) Teilanmeldung aus: 94924252.3
(73) Patentinhaber: KUKA Schweissanlagen GmbH, 86165 Augsburg (DE)
(72) Erfinder: Rippl, Peter, 86163 Augsburg (DE); Stadler, Josef, 86316 Wulfertshausen (DE); Kaimer, Horst, 89346 Bibertal (DE); Sauer, Miroslav, 86356 Neusäss (DE); Mühlberger, Dieter, 86163 Augsburg (DE)
(74) Vertreter: Ernicke, Hans-Dieter, Dipl.-Ing.

(56) Entgegenhaltungen:
- EP-A- 0 195 089
- EP-A- 0 301 098
- DE-A- 2 410 866
- DE-A- 3 220 242
- US-A- 4 544 825
- US-A- 4 990 743
- DATABASE WPI Section Ch, Week 9038 Derwent Publications Ltd., London, GB; Class M23, AN 90289131 XP002043893 TONKAL ET AL.: & SU 1 547 995 A (AS UKR ELECTRODYNAMICS) , 7.März 1990
- PATENT ABSTRACTS OF JAPAN vol. 4, no. 135 (C-025), 20.September 1980 & JP 55 084573 A (NIPPON STEEL CORP), 25.Juni 1980,

## Beschreibung

Die Erfindung betrifft ein Verfahren zum Schweißen, insbesondere zum Lichtbogen-Schutzgasschweißen, mit den Merkmalen im Oberbegriff des Hauptanspruchs.

Ein solches Verfahren ist aus der JP-A-550 84 573 bekannt.

Die JP 550 84 573 befaßt sich mit dem Schweißen zweier unterschiedlich dicker Bleche, wobei die Schweißdüse bei konstantem Bahnvorschub seitliche Auslenkungen gegenüber der Schweißnaht ausführt. Bei der mechanischen Pendelbewegung werden Strom und Spannung parallel verändert. Die Veränderungen sind gegenläufig. Strom und Spannung sind auf dem dicken Blech wesentlich höher als auf dem dünneren Blech, wobei die Verweilzeit auf dem dicken Blech jedoch deutlich niedriger als auf dem dünnen Blech ist.

Die SU-A-154 79 95 offenbart eine Mikroprozessorsteuerung für mechanische Pendelbewegungen einer Schweißdüse, welche nach mehreren Richtungen beweglich ist. Die Schweißdüse kann entlang der verfolgten Bahn oder Schweißnaht kreisende oder wiederkehrende Düsenbewegungen ausführen.

Aus der US-C-4 544 825 ist es bekannt, gewölbte Oberflächen von Turbinenschaufeln oder dergleichen empfindliche Bauteile mit einem Schweißüberzug zu versehen und die Schweißdüse bei konstantem Bahnvorschub seitliche Pendelbewegungen ausführen zu lassen. Dabei wird die Stromhöhe dem Verlauf der seitlichen Pendelbewegung angepaßt. An den Bauteilrändern wird der Schweißstrom erniedrigt, um ein Abschmelzen der empfindlichen Werkstückränder zu verhindern. Andererseits dient die Stromabsenkung der besseren Meßbarkeit der Werkstückränder, die über Stromänderungen des Lichtbogens erfaßt werden sollen. Außerdem soll einem Erlöschen des Lichtbogens beim Überfahren der Ränder vorgebeugt werden. Die geometrischen Pendelbewegungen sind beim Schweißen gleich. Über die Kantenabtastung des Werkstücks mittels Lichtbogen-Stromüberwachung wird eine Zentrierung der Pendelmittellinie bewirkt. Die Stromabsenkung erfolgt in Abhängigkeit vom Pendelhub, wobei die Absenkung bei einer vorbestimmten Amplitude einsetzt, die weit genug vom Werkstückrand entfernt ist.

Die EP-A-0 195 089 lehrt die Anpassung der Amplituden einer Pendelbewegung beim Schweißen an unterschiedliche Werkstückdicken. Dabei wird nur die Amplitude der Pendelauslenkung verändert, nicht aber die Frequenz und die Grundform des Pendelmusters. Es findet lediglich eine einfache Dreiecksform der Pendelbewegung Anwendung. Die Auslenkung ist auf dem dünnen Blech stärker als auf dem dicken Blech, so daß der Wärmeeintrag auf dem empfindlicheren und dünneren Blech größer als auf dem dickeren ist. Die Entgegenhaltung zielt darauf ab, die Schweißnaht volumenmäßig mehr zum einen oder anderen Blech verlagern zu können.

Beim mechanisierten und automatischen Schweißen wird das Schweißwerkzeug von einem Manipulator entlang einer vorgegebenen Bahn geführt. Beim Schutzgasschweißen (MIG/MAG) kommt je nach Werkstoff, Blechdicke und Schweißaufgabe der Kurz-, Sprüh- oder Pulslichtbogen unter Verwendung von Inert- oder Mischgasen zur Anwendung. Beispielsweise wird beim Einsatz von Kohlendioxid mit Kurz- oder Langlichtbogen geschweißt. Die Prozeßparameter und damit die Lichtbogenart bleibt über die gesamte Schweißnahtlänge konstant. Im Dünnblechbereich und bei Wurzelschweißungen im Dickblechbereich sowie bei spaltbehafteten Bauteilen muß im unteren Parameterfeld mit Kurzlichtbogen geschweißt werden. Bei Nichteisenmetallen wie Aluminium wird mit transistorisierten Stromquellen unter Verwendung inerter Gase im Pulslichtbogenbereich geschweißt.

Es ist Aufgabe der vorliegenden Erfindung, für die unterschiedlichen Schweißaufgaben eine größere Prozeßsicherheit zu erreichen.

Die Erfindung löst diese Aufgabe mit den Merkmalen im Hauptanspruch.
Durch die mechanische Pendelbewegung mit veränderlichen Geschwindigkeiten längs der verfolgten Bahn und durch die an der thermischen Belastbarkeit orientierte Veränderung der an der Schweißstelle eingebrachten Wärmeenergie in Abhängigkeit von Material und/oder Geometrie des Werkstücks wird eine höhere Gleichmäßigkeit der Schweißbedingungen erreicht. Hierdurch wird eine größere Prozeßtiefe auch bei wechselnden Bauteiltoleranzen erzielt. An der Schweißstelle kann es nicht mehr zu Überhitzungen, zu einem Durchbrennen der Naht an dünnen Blechen, zu einem ungleichmäßigen Füllen von Nähten, zu einem Aufbrennen beschichteter Bleche oder zu sonstigen Schweißfehlern kommen.

Besondere Vorteile ergeben sich beim Schweißen unterschiedlicher Werkstücke, die im Werkstoff und/oder der Geometrie, z.B. der Blechdicke, differieren. Gleiches gilt auch bei Werkstücken mit unterschiedlichen Schweißbedingungen, bei denen z.B. die Wärme an der Schweißstelle verschieden schnell abgeführt wird. Für die beiden Werkstücke läßt sich mit der Erfindung die Wärmezufuhr unterschiedlich einstellen und dabei optimieren.

Die Steuerung der eingebrachten Wärmeenergie kann auf verschiedene Weise erfolgen. Einerseits läßt sich dies über die Bewegung des Schweißwerkzeuges, d.h. z.B. über die Geschwindigkeit bzw. Verweildauer oder den Abstand bzw. die Lichtbogenlänge, steuern. Je langsamer die Geschwindigkeit bzw. je länger die Verweildauer und/oder je kürzer der Lichtbogen, desto höher ist der Einbrand. Die mechanischen Pendelbewegungen können zusätzlich quer zur Bahn bzw. Schweißnaht oder in deren Längsrichtung ablaufen. Vorzugsweise handelt es sich dabei um Pendelbewegungen, die sich periodisch wiederholen.

Andererseits kann die eingebrachte Wärmeenergie auch über den Prozeßparameter gesteuert werden, beispielsweise die Stromhöhe oder die Drahtvorschubgeschwindigkeit. Beim Impulsschweißen kann auch über die Pulssteuerung Einfluß genommen werden. Die Prozeßparameter können ebenfalls pendeln und sich vorzugsweise periodisch verändern.

In einer besonders vorteilhaften Ausführungsform der Erfindung werden mit den mechanischen Pendelbewegungen synchron auch die Prozeßparameter verändert. Hierdurch läßt sich die Wärmeeinbringung besonders gut steuern.

In der bevorzugten Ausführungsform werden die mechanischen Bewegungen und die Veränderungen der Prozeßparameter von der Manipulatorsteuerung aus gesteuert, vorzugsweise über einen Funktionsgenerator. Dies ermöglicht eine besonders gute Beherrschung der Einstellungen und eine sichere Synchronisation.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Fig. 1:: einen Manipulator mit einem Schweißwerkzeug und einer Manipulatorsteuerung nebst Funktionsgenerator,
- Fig. 2:: mehrere Programmierfenster für den Funktionsgenerator mit verschiedenen Pendeleinstellungen und
- Fig. 3:: verschiedene Schweißaufgaben mit zugehörigen Pendeleinstellungen.

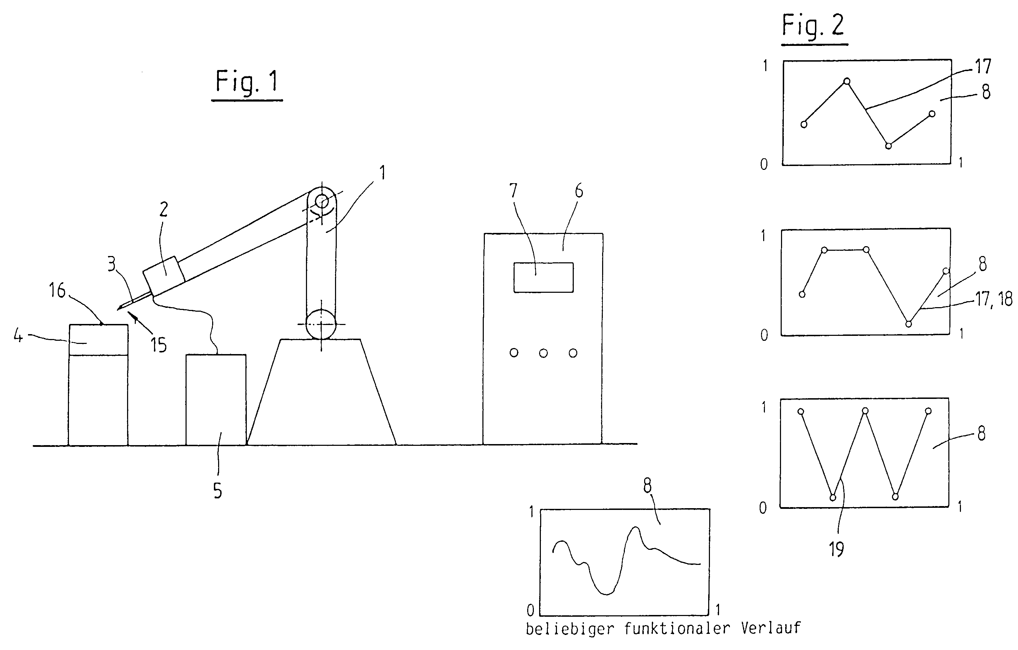

Fig. 1 zeigt in einer schematischen Anordnung einen mehrachsigen Manipulator (1), vorzugsweise einen sechs- oder mehrachsigen Industrieroboter, der an seiner Hand (2) ein Schweißwerkzeug (3) angeflanscht hat. Hierbei handelt es sich vorzugsweise um einen Schweißbrenner (15) zum Lichtbogen-Schutzgasschweißen. Alternativ kann es aber auch ein beliebiges anderes Schweißwerkzeug sein.

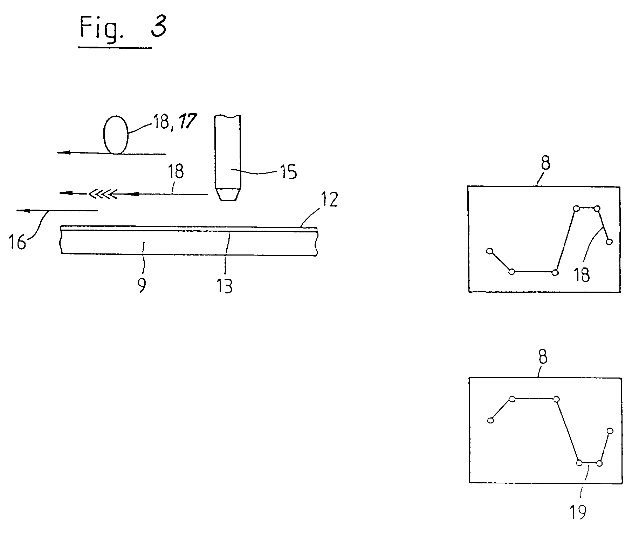

Der Manipulator (1) führt das Schweißwerkzeug (3) entlang einer vorgegebenen Bahn (16) an einem Werkstück (4). Fig. 3 zeigt hierzu Einzelbeispiele.

Eine Schweißstromquelle (5) ist mit dem Schweißwerkzeug (3) verbunden. Zu der Anordnung gehören noch eine Schutzgasquelle und gegebenenfalls eine Versorgung und ein Antrieb für einen Schweißdraht, der am Schweißbrenner (15) austritt. Letztere sind der Übersicht halber nicht dargestellt.

Der Manipulator (1) besitzt eine Manipulatorsteuerung (6), die einen Rechner mit mindestens einem Prozessor und einem oder mehreren Datenspeichern für Programme, Parameter und dergleichen Daten aufweist. In der Manipulatorsteuerung (6) ist die zu verfolgende Bahn (16), d.h. die Schweißnaht in ihrem Verlauf und ihrer Lage am Werkstück (4) gespeichert. Durch geeignete Maßnahmen wird die Ist-Lage der Bahn (16) gesucht und die gespeicherte Soll-Lage in der Manipulatorsteuerung (6) entsprechend abgeglichen. Danach verfolgt der Manipulator (1) exakt die programmierte Bahn (16).

Zur Optimierung der Schweißbedingungen wird während des Bahnvorschubs die an der Schweißstelle (13) eingebrachte Wärmeenergie in Anpassung an das Material und/oder an die Geometrie des Werkstücks (4) örtlich und/oder zeitlich verändert. Die Einbringung der Wärmeenergie kann auf verschiedene Weise, beispielsweise auf mechanischem und/oder prozeßtechnischem Weg beeinflußt werden.

Die Höhe der eingebrachten Wärmeenergie hängt von der Zeit und/oder der Intensität ab. Die Zeit kann beispielsweise über die Verweildauer des Schweißbrenners (15) bzw. des Lichtbogens gesteuert werden. Im Grunde ist dies auch auf prozeßtechnischem Weg möglich, beispielsweise durch Ein- und Ausschalten des Schweißstroms. Die Intensität läßt sich auf mechanischem Weg über den Abstand des Schweißbrenners (15) von der Schweißstelle (13) bzw. über die Länge des Lichtbogens steuern. Auf prozeßtechnischem Weg ist dies über eine entsprechende Veränderung der Prozeßparameter, beispielsweise des Schweißstroms, der Pulsfrequenz, der Pulsbreite, der Drahtvorschubgeschwindigkeit oder dergleichen möglich.

Die mechanischen Bewegungen und/oder die Veränderungen der Prozeßparameter können in einem frei definierbaren Funktionsverlauf vorgenommen werden. So können symmetrische oder asymmetrische, dreiecks-, trapez- oder sinusförmige oder beliebige andere Verläufe definiert werden. Fig. 2 zeigt hierzu einige beispielhafte Kurvenverläufe in Fenstern (8). Vorzugsweise handelt es sich hierbei um periodische Veränderungen in der Art einer Pendelbewegung.

Die mechanischen Bewegungen des Schweißwerkzeugs (3) untergliedern sich vorzugsweise in zwei Bereiche.

Dies ist einerseits das sogenannte Geometriependeln (17), bei dem das Schweißwerkzeug (3) seitlich zur Bahn (16) bzw. zur Schweißnaht ausgelenkt wird. Dies beinhaltet, daß die Auslenkbewegung horizontal, aber auch vertikal oder in einer beliebigen Ebene schräg erfolgen kann. Die Auslenkbewegung kann zudem im rechten Winkel quer zur Bahn (16), aber auch schräg gerichtet sein.

Das sogenannte Geschwindigkeitspendeln (18) besteht in einer Veränderung der Bahnvorschubsgeschwindigkeit, indem das Schweißwerkzeug (3) längs der verfolgten Bahn (16) beschleunigt und/oder gebremst wird. Im Extremfall kann sich eine Start/Stop-Bewegung oder sogar eine Rückwärtsbewegung ergeben.

Die Veränderung der Prozeßparameter wird als Technologiependeln (19) bezeichnet. Hierbei kann ein einzelner Prozeßparameter, z.B. der Schweißstrom, verändert werden. Es ist aber auch möglich, mehrere Prozeßparameter zu modulieren.

Zur Steuerung der eingebrachten Wärmeenergie kommt das Geschwindigkeitspendeln (18) zum Einsatz, das zudem mit einem Technologiependeln (19) und gegebenenfalls auch mit einem Geometriependeln (17) kombiniert ist. Das Technologiependeln (19) läuft hierbei synchron zu den mechanischen Pendelbewegungen ab.

Die drei vorerwähnten Pendelarten können auf beliebigen konstruktiv technischen Wegen erzielt und gesteuert werden. Zum Beispiel lassen sich die mechanischen Pendelbewegungen durch ein Pendelgerät mit Kurvenscheiben realisieren. In ähnlicher Weise läßt sich auch der Drahtantrieb beeinflussen. Über angesteuerte Potentiometer oder dergleichen können beispielsweise die elektrischen Prozeßparameter verändert werden. Zudem ist es möglich, Kennlinien für den Schweißstrom an der Schweißstromquelle (5) umzuschalten, insbesondere wenn es sich hierbei um eine transistorisierte Schweißstromquelle handelt.

In der bevorzugten Ausführungsform der Erfindung erfolgt die Steuerung aller Pendelbewegungen über die Manipulatorsteuerung (6). Diese weist dazu einen Funktionsgenerator (7) auf. Er besteht ebenfalls aus einem Rechner mit mindestens einem Prozessor und einem oder mehreren Datenspeichern sowie zugehöriger Software. In der bevorzugten integrierten Ausführungsform kann der Funktionsgenerator (7) auf die Hardware der Manipulatorsteuerung (6) zurückgreifen. Er kann auch als Softwarefunktion in der Manipulatorsteuerung (6) realisiert sein. Der Funktionsgenerator (7) kann modular aufgebaut sein und mehrere Pendelarten gleichzeitig und synchron steuern.

Die mechanischen Pendelbewegungen und/oder die Prozeßpendelbewegungen werden in mehreren Funktionsabschnitten gleicher oder zumindest proportionaler Größe im Funktionsgenerator (7) eingegeben. Dies geschieht über eine Benutzeroberfläche, die Fenster (8) mit normierter Größe zur Verfügung stellt. Der Funktionsgenerator (7) verfügt im gezeigten Ausführungsbeispiel über drei Fenster (8), in die verschiedene Parameter für die unterschiedlichen Bewegungen und/oder Prozesse eingegeben werden können. Die Fensterzahl kann bei geeigneter Auslegung von Hardware und Software beliebig kleiner oder größer sein. Die Parameter werden als Wertepaare in den normierten Fenstern (8) eingegeben. Hierbei handelt es sich um qualitative Daten. Sie werden durch Bezugsgrößen, insbesondere Offset-Faktoren und/oder Verstärkungsfaktoren quantifiziert. Aus den einzelnen Wertepaaren bzw. Parametern können im Funktionsgenerator (7) sogenannte Splines errechnet werden.

Aus den Wertepaaren in den Fenstern (8) und den hieraus gewonnenen Splines werden Funktionen für die mechanischen und prozeßtechnischen Pendelbewegungen berechnet. Die Funktionen laufen in den eingangs erwähnten Funktionsabschnitten synchron ab. Die Synchronisation erfolgt vorzugsweise über den Weg des Bahnvorschubs (16). Der Funktionsgenerator (7) startet vorzugsweise mit Beginn der Manipulatorbewegung (1) entlang der Bahn (16) die erwähnten Funktionsabschnitte. Der Start erfolgt gleichzeitig, wobei die Funktionsabschnitte mit den darin vorgegebenen Funktionen synchron und simultan abgearbeitet werden. Die Funktionsabschnitte werden am Ende gemeinsam und zugleich abgeschlossen und erneut gestartet. Daduch werden die Funktionsabschnitte zyklisch wiederholt, wobei sie Start und Ende nach dem Synchronisationsbezug, hier den Bahnvorschub richten. Der Zyklus bzw. der Takt bleibt vorzugsweise gleich.

Die Parameter bzw. die daraus berechneten Funktionen bleiben zumindest für die Dauer des Funktionsabschnittes im Funktionsgenerator (7) gespeichert. Je nach Komplexität der Bewegungen und/oder Prozesse können die Funktionen wiederholt oder verändert werden. Im einfachsten Fall wird die gleiche Funktion ständig wiederholt, indem beispielsweise eine gleichbleibende, mit jedem Funktionsabschnitt sich periodisch wiederholende Pendelbewegung erzeugt wird.

Es ist aber auch möglich, die Funktionen permanent oder periodisch zu verändern. Hierzu können die Funktionen oder die Wertepaare bzw. Parameter in Datenspeichern festgehalten und nach Vorgabe eines Programms einzeln und selektiv abgerufen werden. Hierbei könnten im einfachsten Fall die Parameter eingegeben und hieraus im Funktionsgenerator (7) Funktionen berechnet werden. Alternativ können auch gleich die fertigen Funktionen bereitgestellt und eingespielt werden.

Fig. 3 zeigt eine Ausführungsform für das kombinierte Geschwindigkeits- und Technologiependeln (18,19). Dies wird bespielsweise zum Schweißen von Blechen (9) mit einer Beschichtung (12) eingesetzt, insbesondere zum Schweißen verzinkter Bleche. Der konstanten Bahnvorschubgeschwindigkeit wird in Längsrichtung der Bahn (16) eine modulierte Geschwindigkeitsänderung überlagert. Der Schweißbrenner (15) wandert dabei abwechselnd langsamer und schneller vor. Die Prozeßparameter werden hierbei gegenläufig (19) gesteuert. Beim langsamen Vorschub werden der Schweißstrom oder ein anderer Prozeßparameter hochgeschaltet. Durch die Erhöhung der Wärmeeinbringung und der Temperatur im Bauteil kann die Beschichtung (12), z.B. eine Zinkschicht, ausgasen. Beim schnellen Vorschub werden die Prozeßparameter niedrig geschaltet. Das Werkstück kann dadurch zum Schutz von Überhitzung wieder etwas abkühlen.

Diese Vorgehensweise ist z.B. auch beim Schweißen von temperaturempfindlichen Werkstoffen, wie Aluminium etc., von Vorteil. Durch die gesteuerte Wärmeeinbringung mit den zwischengeschalteten Kühlphasen wird ein Einbrennen der Schweißbahn verhindert. Ferner läßt sich die Aufheizung des Werkstücks und der Einfluß der Restwärme besser kontrollieren.

In Variation zur gezeigten Ausführungsform kann das Geschwindigkeitspendeln (18) mit einem Geometriependeln (17) in Form einer Abstandsänderung kombiniert werden. Durch entsprechende Stop- und Rückwärtsbewegungen kann sich dadurch eine im linken Teil von Fig. 3 dargestellte Rollbewegung ergeben. Der Lichtbogen brennt abwechselnd auf den Nahtflanken des Grundwerkstoffs und je nach überlagerter Rückzugsgeschwindigkeit mehr oder minder auf dem Schweißbad aus der Vorlaufbewegung. Damit kann der Einbrand vor allem bei spaltbehafteten Bauteilen beeinflußt und somit die Gefahr des Durchbrennens vermieden werden.

In ähnlicher Weise kann auch bei zwei Werkstücken aus unterschiedlichen Werkstoffen verfahren werden. Das thermisch empfindlichere und damit schneller aufheizbare Blech erhält weniger Wärme als das andere Blech. Auf diese Weise lassen sich auch besonders kritische Werkstückpaarungen bearbeiten, die sich im Material und in der Geometrie unterscheiden.

In einer Variante des Geometriependelns (17), bei der ein dickes Blech und ein dünnes Blech miteinander zu verschweißen sind, führt der Schweißbrenner (15) eine asymetrische Pendelbewegung (17) (sogenanntes Geometriependeln) aus. Er verweilt auf dem dicken Blech länger als auf dem dünnen Blech. Durch die längere Verweilzeit des Lichtbogens ergibt sich eine stärkere Wärmeeinbringung und damit ein tieferer Einbrand im dicken Blech. Das dünne Blech wird hingegen nur kurzzeitig thermisch belastet, so daß die Naht am dünneren Blech nicht durchfällt. Es ergibt sich eine gleichmäßige Schweißnaht.

Das Geometriependeln (17) wird von einem angepaßten Technologiependeln (19) begleitet. Hierbei werden gemäß der angepaßten Funktion die Prozeßparameter, insbesondere der Schweißstrom entsprechend den mechanischen Pendelbewegungen hoch und tief geschaltet. Auf dem dicken Blech (9) sind die Prozeßparameter höher als auf dem dünnen Blech (10).

In einer weiteren Variante für die Verschweißung zweier im wesentlichen gleich dicker Bleche mit einem dazwischenliegenden Spalt kommt eine symmetrische Pendelbewegung (17) (Geometriependeln) zum Einsatz. Analog werden wiederum die Prozeßparameter beim Technologiependeln (19) hoch und tief geschaltet. In der Auslenkphase ist beispielsweise der Schweißstrom höher als im Bereich des Spaltes. Durch den stärkeren Einbrand an den Nahträndern erfolgt hier ein stärkeres Abschmelzen als im Spalt und damit eine gleichmäßigere Füllung des Spaltes.

Die Technik kann auch zum Wurzelschweißen verwendet werden. Sie kann außerdem bei Kehlnähten und Überlappverbindungen sowie bei der Überbrückung von Bauteiltoleranzen sowie bei größeren Nahtquerschnitten an Dickblechen in Wannenlage zur Anwendung gelangen.

Die Pendelfrequenzen bewegen sich vorzugsweise im Bereich zwischen 0,2 und 5 Hz. Die beim mechanischen Pendeln (17,18) und beim Technologiependeln (19) verwendeten Frequenzen können sich jedoch unterscheiden, indem beispielsweise die Prozeßparameter mit doppelter Frequenz gegenüber den mechanischen Bewegungsparametern pendeln. Dabei wird jedoch, wie auch in den vorbeschriebenen Ausführungsbeispielen, sichergestellt, daß die Synchronisation der verschiedenen Pendelarten (17,18,19) erhalten bleibt, um im Sinne der Erfindung örtlich gezielt einen schwankenden Energieeintrag am Werkstück (4) zu erzeugen.

In den vorbeschriebenen Ausführungsbeispielen werden die verschiedenen Pendelbewegungen (17,18,19) nach Vorgaben und Sollwerten gesteuert. Die Vorgaben und Sollwerte können durch Probeschweißungen, aber auch durch Berechnungen über die Energiebilanz oder dgl. ermittelt werden.

Die Vorgaben und Sollwerte können für den Schweißjob vorab fest programmiert und dann abgefahren werden. Es ist alternativ auch möglich, die Steuerung variabel und bauteilbezogen vorzunehmen, beispielsweise über einen geeigneten voreilenden Sensor (14), der den Spalt vermißt und entsprechend die Vorgabewerte einstellt und gegebenenfalls auch während des Schweißjobs ändert. Bei unterschiedlichen Werkstücken mit differierender Wärmeeinbringung kann auch eine getrennte Steuerung erfolgen, wobei für jedes Werkstück ein oder mehrere eigene Sensoren eingesetzt werden können. In allen Fällen eignet sich der Funktionsgenerator (7) besonders.

Neben einer variablen Steuerung ist auch eine Regelung der Pendelbewegungen (17,18,19) möglich. Hierzu werden aussagefähige Daten über die Schweißqualität, die Werkstückbelastung oder dgl. aufgenommen und in die Steuerung, insbesondere den Funktionsgenerator (7), rückgeführt. Dies kann beispielsweise in einer Temperaturerfassung und einer Thermorückführung bestehen.

### BEZUGSZEICHENLISTE

- 1: Manipulator
- 2: Hand
- 3: Schweißwerkzeug
- 4: Werkstück
- 5: Schweißstromquelle
- 6: Manipulatorsteuerung
- 7: Funktionsgenerator
- 8: Fenster
- 9: Blech, dick
- 10: Blech, dünn
- 11: Spalt
- 12: Beschichtung
- 13: Schweißstelle
- 14: Sensor
- 15: Schweißbrenner
- 16: Bahn, Bahnvorschub
- 17: Pendelbewegung, Geometriependeln
- 18: Pendelbewegung, Geschwindigkeitspendeln
- 19: Pendelbewegung, Technologiependeln

## Patentansprüche

1. Verfahren zum Schweißen, insbesondere zum Lichtbogen-Schutzgasschweißen, von ein oder mehreren Werkstücken (9,10) mit einem Schweißwerkzeug (3), das von einem Manipulator (1) entlang einer vorgegebenen Bahn (16) geführt wird, wobei das Schweißwerkzeug (3) mechanische Pendelbewegungen ausführt und parallel dazu die Prozeßparameter (19) in der Höhe verändert werden, und wobei die an der Schweißstelle (13) eingebrachte Wärmeenergie in Anpassung an das Material und/oder die Geometrie der Werkstücke (9,10) derart örtlich und/oder zeitlich verändert wird, daß die thermische Belastbarkeit der Werkstücke (9,10) nicht überschritten wird, dadurch **gekennzeichnet**, daß beim mechanischen Pendeln (18) das Schweißwerkzeug (3) längs der verfolgten Bahn (16) zeitweise beschleunigt und/oder gebremst und/oder angehalten wird.

2. Verfahren nach Anspruch 1, dadurch **gekennzeichnet**, daß die Prozeßparameter (19) gegenläufig zum mechanischen Pendeln (18) gesteuert werden.

3. Verfahren nach Anspruch 1 oder 2, dadurch **gekennzeichnet**, daß das Schweißwerkzeug (3) auf der verfolgten Bahn (16) zeitweise rückwärts bewegt wird.

4. Verfahren nach Anspruch 1, 2 oder 3, dadurch **gekennzeichnet**, daß das Schweißwerkzeug (3) beim mechanischen Pendeln (17) zusätzlich quer oder schräg zur Bahn (16) ausgelenkt wird.

5. Verfahren nach Anspruch 1 oder einem der folgenden, dadurch **gekennzeichnet**, daß zeitweise der Abstand des Schweißwerkzeugs (3) über der Bahn (16) verändert wird.

6. Verfahren nach Anspruch 5, dadurch **gekennzeichnet**, daß das Schweißwerkzeug (3) Rollbewegungen über der Bahn (16) ausführt.

7. Verfahren nach Anspruch 1 oder einem der folgenden, dadurch **gekennzeichnet**, daß das mechanische und das prozeßtechnische Pendeln (17,18,19) periodisch erfolgt.

8. Verfahren nach Anspruch 1 oder einem der folgenden, dadurch **gekennzeichnet**, daß das mechanische und das prozeßtechnische Pendeln (17,18,19) von der Manipulatorsteuerung (6) gesteuert wird.

9. Verfahren nach Anspruch 8, dadurch **gekennzeichnet**, daß das mechanische und das prozeßtechnische Pendeln von einem Funktionsgenerator (7) in der Manipulatorsteuerung (6) gemeinsam und synchron gesteuert wird.

10. Verfahren nach Anspruch 1 oder einem der folgenden, dadurch **gekennzeichnet**, daß die Pendel-Frequenz ca. 0,2 bis 5 Hz beträgt.

11. Verfahren nach Anspruch 1 oder einem der folgenden, dadurch **gekennzeichnet**, daß die an der Schweißstelle (13) eingebrachte Wärmeenergie geregelt wird.

## Claims

1. Process for welding, in particular inert-gas arc welding, one or more workpieces (9, 10) with a welding tool (3), which is guided along a given path (16) by a manipulator (1), the welding tool (3) performing mechanical oscillating movements, and in parallel with this the process parameters (19) being changed in terms of their level and the thermal energy introduced at the welding point (13) being changed in terms of its location and/or in terms of time to adapt to the material and/or the geometry of the workpieces (9, 10) in such a way that the thermal load-bearing capacity of the workpieces (9, 10) is not exceeded, characterized in that, during the mechanical oscillation (18), the welding tool (3) is at times accelerated and/or braked and/or stopped along the path (16) followed.

2. Process according to Claim 1, characterized in that the process parameters (19) are controlled in opposition to the mechanical oscillation (18).

3. Process according to Claim 1 or 2, characterized in that the welding tool (3) is at times moved backwards on the path (16) followed.

4. Process according to Claim 1, 2 or 3, characterized in that, during the mechanical oscillation (17), the welding tool (3) is additionally deflected transversely or obliquely with respect to the path (16).

5. Process according to Claim 1 or one of the following claims, characterized in that at times the distance of the welding tool (3) above the path (16) is changed.

6. Process according to Claim 5, characterized in that the welding tool (3) performs rolling movements over the path (16).

7. Process according to Claim 1 or one of the following claims, characterized in that the mechanical and process-technical oscillation (17, 18, 19) takes place periodically.

8. Process according to Claim 1 or one of the following claims, characterized in that the mechanical and process-technical oscillation (17, 18, 19) is controlled by the manipulator control (6).

9. Process according to Claim 8, characterized in that the mechanical and process-technical oscillation is controlled jointly and synchronously by a function generator (7) in the manipulator control (6).

10. Process according to Claim 1 or one of the following claims, characterized in that the oscillation frequency is about 0.2 to 5 Hz.

11. Process according to Claim 1 or one of the following claims, characterized in that the thermal energy introduced at the welding point (13) is regulated.

## Revendications

1. Procédé de soudage, notamment de soudage à l'arc sous protection gazeuse, d'une ou plusieurs pièces (9, 10) au moyen d'un outil (3) de soudage, qui est guidé par un manipulateur (1) le long d'une trajectoire (16) prédéfinie, l'outil (3) de soudage effectuant des mouvements de balancement mécanique et, parallèlement à cela, les niveaux de paramètres (19) opératoires étant modifiés, et l'énergie thermique apportée à la soudure (13) étant modifiée localement et/ou dans le temps, en adaptation au matériau et/ou à la géométrie des pièces (9, 10), de façon que l'aptitude à supporter une charge thermique des pièces (9, 10) ne soit pas dépassée, **caractérisé** en ce que, lors du balancement (18) mécanique, l'outil (3) de soudage est temporairement accéléré et/ou freiné et/ou arrêté le long de la trajectoire (16) suivie.

2. Procédé suivant la revendication 1, **caractérisé** en ce que les paramètres (19) opératoires sont commandés en sens contraire du balancement (18) mécanique.

3. Procédé suivant la revendication 1 ou 2, **caractérisé** en ce que l'outil (3) de soudage est déplacé de temps en temps en marche arrière sur la trajectoire (16) suivie.

4. Procédé suivant la revendication 1, 2 ou 3, **caractérisé** en ce que, lors du balancement (17) mécanique, l'outil (3) de soudage est en plus dévié transversalement ou en oblique par rapport à la trajectoire (16).

5. Procédé suivant la revendication 1 ou une des revendications suivantes, **caractérisé** en ce que la distance de l'outil (3) de soudage au-dessus de la trajectoire (16) est modifiée de temps en temps.

6. Procédé suivant la revendication 5, **caractérisé** en ce que l'outil (3) de soudage accomplit des mouvements de roulis au-dessus de la trajectoire (16).

7. Procédé suivant la revendication 1 ou une des revendications suivantes, **caractérisé** en ce que le balancement (17, 18) mécanique et le balancement (19) technologique s'effectuent de façon périodique.

8. Procédé suivant la revendication 1 ou une des revendications suivantes, **caractérisé** en ce que le balancement (17, 18) mécanique et le balancement (19) technologique sont commandés par le dispositif (6) de commande du manipulateur.

9. Procédé suivant la revendication 8, **caractérisé** en ce que le balancement mécanique et le balancement technologique sont commandés conjointement et de manière synchrone par un générateur (7) de fonction dans le dispositif (6) de commande du manipulateur.

10. Procédé suivant la revendication 1 ou une des revendications suivantes, **caractérisé** en ce que la fréquence de balancement est d'environ 0,2 à 5 Hz.

11. Procédé suivant la revendication 1 ou une des revendications suivantes, **caractérisé** en ce que l'énergie thermique apportée à la soudure (13) est régulée.
